(19) **Europäisches Patentamt**
**European Patent Office**
**Office européen des brevets**

(11) **EP 4 116 861 A2**

(12) # EUROPEAN PATENT APPLICATION

(43) Date of publication:
**11.01.2023 Bulletin 2023/02**

(21) Application number: **22205144.3**

(22) Date of filing: **02.11.2022**

(51) International Patent Classification (IPC):
**G06F 40/30** (2020.01)    **G06N 3/08** (2006.01)
**G06V 20/40** (2022.01)    G06F 40/279 (2020.01)

(52) Cooperative Patent Classification (CPC):
**G06F 40/30; G06N 3/0454; G06N 3/08;**
**G06V 20/41;** G06F 40/205; G06F 40/279

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **05.11.2021   CN 202111307885**

(71) Applicant: **Beijing Baidu Netcom**
**Science Technology Co., Ltd.**
**Beijing 100085 (CN)**

(72) Inventors:
• **HE, Dongliang**
  **Beijing, 100085 (CN)**
• **DING, Errui**
  **Beijing, 100085 (CN)**

(74) Representative: **Maiwald GmbH**
  **Elisenhof**
  **Elisenstraße 3**
  **80335 München (DE)**

(54) **METHOD AND APPARATUS FOR PRE-TRAINING SEMANTIC REPRESENTATION MODEL AND ELECTRONIC DEVICE**

(57)    A method for pre-training a semantic representation model includes: for each video-text pair in pre-training data, determining (S101) a mask image sequence, a mask character sequence, and a mask image-character sequence of the video-text pair; determining (S 102) a plurality of feature sequences and mask position prediction results respectively corresponding to the plurality of feature sequences by inputting the mask image sequence, the mask character sequence, and the mask image-character sequence into an initial semantic representation model; and building (S103) a loss function based on the plurality of feature sequences, the mask position prediction results respectively corresponding to the plurality of feature sequences and true mask position results, and adjusting coefficients of the semantic representation model to realize training.

for each video-text pair in pre-training data, determine a mask image sequence, a mask character sequence, and a mask image-character sequence of the video-text pair — S101

determine a plurality of feature sequences and mask position prediction results respectively corresponding to the plurality of feature sequences by inputting the mask image sequence, the mask character sequence, and the mask image-character sequence into an initial semantic representation model — S102

build a loss function based on the plurality of feature sequences, the mask position prediction results respectively corresponding to the plurality of feature sequences and true mask position results, and adjust coefficients of the semantic representation model to realize training — S103

**FIG. 1**

**Description**

<u>TECHNICAL FIELD</u>

The disclosure relates to a field of artificial intelligence technologies, especially fields of natural language processing, computer vision and deep learning technologies, and in particular to a method for pre-training a semantic representation model, an apparatus for pre-training a semantic representation model and an electronic device.

<u>BACKGROUND</u>

Currently, the cross-modal pre-training technology in the related art mainly adopts a double-tower structure composed of a visual feature model and a text feature model. The input of the visual feature model is visual modality of video, and the input of the text feature model is text modality of texts related to the video. The model pre-training is realized based on the output of the visual feature model and the output of the text feature model. In the pre-training process, the video feature model and the text feature model are independent of each other.

<u>SUMMARY</u>

Embodiments of the disclosure provide a method for pre-training a semantic representation model, an apparatus for pre-training a semantic representation model and an electronic device.

According to a first aspect, a method for pre-training a semantic representation model is provided. The method includes: for each video-text pair in pre-training data, determining a mask image sequence, a mask character sequence and a mask image-character sequence of the video-text pair; determining a plurality of feature sequences and mask position prediction results respectively corresponding to the plurality of feature sequences by inputting the mask image sequence, the mask character sequence and the mask image-character sequence into an initial semantic representation model; and building a loss function based on the plurality of feature sequences, the mask position prediction results and true mask position results, and adjusting coefficients of the semantic representation model to realize training.

According to a second aspect, an apparatus for pre-training a semantic representation model is provided. The apparatus includes: a determining module, an inputting module and an adjusting module. The determining module is configured to, for each video-text pair in pre-training data, determine a mask image sequence, a mask character sequence and a mask image-character sequence of the video-text pair. The inputting module is configured to determine a plurality of feature sequences and mask position prediction results respectively corresponding to the plurality of feature sequences by inputting the mask image sequence, the mask character sequence and the mask image-character sequence into an initial semantic representation model. The adjusting module is configured to build a loss function based on the plurality of feature sequences, the mask position prediction results and true mask position results, and adjust coefficients of the semantic representation model to realize training.

According to a third aspect, an electronic device is provided. The electronic device includes: at least one processor and a memory communicatively coupled to the at least one processor. The memory stores instructions executable by the at least one processor, and when the instructions are executed by the at least one processor, the at least one processor is enabled to implement the method according to the first aspect of the disclosure.

According to a fourth aspect, a non-transitory computer-readable storage medium storing computer instructions is provided. The computer instructions are configured to cause a computer to implement the method according to the first aspect of the disclosure.

According to a fifth aspect, a computer program product including computer programs is provided. When the computer programs are executed by a processor, the method according to the first aspect of the disclosure is implemented.

It is understandable that the content described in this section is not intended to identify key or important features of the embodiments of the disclosure, nor is it intended to limit the scope of the disclosure. Additional features of the disclosure will be easily understood based on the following description.

<u>BRIEF DESCRIPTION OF THE DRAWINGS</u>

The drawings are used to better understand the solution and do not constitute a limitation to the disclosure, in which:

FIG. 1 is a flowchart illustrating a method for pre-training a semantic representation model according to examples of the disclosure.
FIG. 2 is a flowchart illustrating a method for pre-training a semantic representation model according to examples of the disclosure.

FIG. 3 is a schematic diagram of pre-training a semantic representation model.

FIG. 4 is a block diagram illustrating an apparatus for pre-training a semantic representation model according to examples of the disclosure.

FIG. 5 is a block diagram illustrating an electronic device used to implement a method for pre-training a semantic representation model according to examples of the disclosure.

## DETAILED DESCRIPTION

The following describes the embodiments of the disclosure with reference to the accompanying drawings, which includes various details of the embodiments of the disclosure to facilitate understanding, which shall be considered merely examples. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

Currently, the cross-modal pre-training technology in the related art mainly adopts a double-tower structure composed of a visual feature model and a text feature model. The input of the visual feature model is visual modality of the video, and the input of the text feature model is the text modality of texts related to the video. The model pre-training is realized based on the output of the visual feature model and the output of the text feature model. In the pre-training process, the video feature model and the text feature model are independent of each other, which makes it difficult to extract the video-text correlation features, and thus the accuracy of the trained model i s poor.

In view of the above problems, the disclosure provides a method for pre-training a semantic representation model, an apparatus for pre-training a semantic representation model and an electronic device.

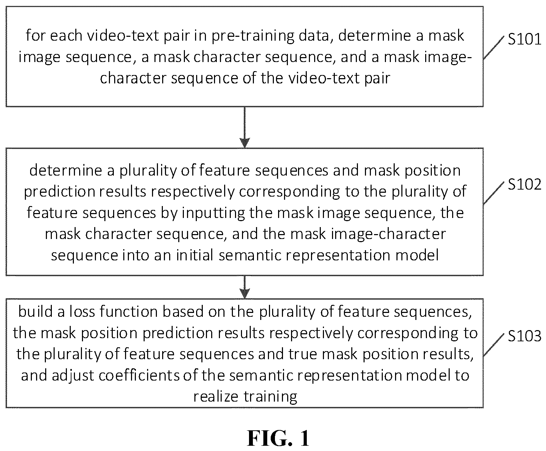

FIG. 1 is a flowchart illustrating a method for pre-training a semantic representation model according to examples of the disclosure. It is noteworthy that the method for pre-training a semantic representation model can be performed by an apparatus for pre-training a semantic representation model. The apparatus can be included in the electronic device, such that the electronic device has the function of pre-training the semantic representation model.

The electronic device can be any device with computing capabilities. The device with computing capability may be, for example, a Personal Computer (PC), a mobile terminal or a server. The mobile terminal may be hardware devices with various operating systems, touchscreens and/or displays, such as, a vehicle-mounted device, a mobile phone, a tablet computer, a personal digital assistant and a wearable device.

As illustrated in FIG. 1, the method for pre-training a semantic representation model further includes the following steps.

At block S101, for each video-text pair in pre-training data, a mask image sequence, a mask character sequence and a mask image-character sequence of the video-text pair are determined.

The video-text pair includes a video and a text corresponding to the video. The text corresponding to the video may be at least one of the following: a title of the video and an abstract of the video. Alternatively, the text may include others according to actual needs, which is not limited here.

The pre-training data may include a certain number of video-text pairs, a certain number of single videos, and a certain number of single texts. The single video refers to a video without any text corresponding thereto. The single text refers to a text without any video corresponding thereto.

The block 101 executed by the apparatus for pre-training a semantic representation model may include: for each video-text pair in the pre-training data, determining a video and a text corresponding to the video in the video-text pair; determining the mask image sequence from the video, and determining the mask character sequence from the text; and obtaining the mask image-character sequence by splicing the mask image sequence and the mask character sequence. Obtaining the mask image-character sequence by splicing the mask image sequence and the mask character sequence can ensure that the mask positions in the mask image-character sequence are consistent with the mask positions in the mask image sequence and the mask character sequence, which facilitates the construction of the loss function and further improves the accuracy of the trained semantic representation model.

For example, determining the mask image sequence from the video includes obtaining a sample image sequence by performing image sampling on the video; and obtaining the mask image sequence by performing vector processing and mask processing on the sample image sequence. Performing the image sampling on the video can sample key frame images in the video and reduce the amount of data processing.

For example, performing the vector processing on the sample image sequence may include: for each image in the sample image sequence, obtaining an adjusted image by adjusting the image according to a preset resolution; and obtaining a vector of a preset dimension by performing stretch processing on the adjusted image, and determining the vector of the preset dimension as a vector corresponding to image. The mask processing may include replacing part of vectors contained in a vector sequence obtained after performing the vector processing on the sample image sequence with mask markers, to obtain the mask image sequence. For example, in the disclosure, the part of vectors may be one vector or more than one vectors.

In order to ensure that the first global image features of the mask image sequence can be obtained after the mask image sequence is input into the semantic representation model, a flag bit can be added at the head (or beginning) of the mask image sequence (in other words, the flag bit is added before a first one contained in the mask character sequence) to obtain the mask image sequence carrying the flag bit. After the mask image sequence is input into the semantic representation model, the feature at a position corresponding to the flag bit in the output feature sequence is the first global image features. The features at other positions in the output feature sequence are features of the images at corresponding positions.

In some examples, determining the mask character sequence from the text may include: performing vector processing (such as word2vector processing) on each character in the text to generate a text vector sequence; and obtaining the mask character sequence by replacing part of vectors contained in the text vector sequence with mask markers.

In order to ensure that a first global character features of the mask character sequence can be obtained after the mask character sequence is input into the semantic representation model, a flag bit can be added at the head (or at the beginning) of the mask character sequence (in other words, the flag bit is added before a first one contained in the mask character sequence) to obtain the mask character sequence carrying the flag bit. After the mask character sequence is input into the semantic representation model, the feature at a position corresponding to the flag bit in the output feature sequence is the first global character features. The features at other positions in the output feature sequence are features of the characters at corresponding positions.

At block S102, a plurality of feature sequences and mask position prediction results respectively corresponding to the plurality of feature sequences are determined by inputting the mask image sequence, the mask character sequence and the mask image-character sequence into an initial semantic representation model.

In some examples, the apparatus for pre-training a semantic representation model can input the mask image sequence separately into the semantic representation model to obtain a feature sequence outputted by the semantic representation model, and obtain corresponding mask position prediction results by performing the mask position prediction based on the feature sequence. The apparatus can separately input the mask character sequence into the semantic representation model to obtain a feature sequence outputted by the semantic representation model and obtain corresponding mask position prediction results by performing the mask position prediction based on the feature sequence. The apparatus can separately input the mask image-character sequence into the semantic representation model to obtain a feature sequence outputted by the semantic representation model and obtain corresponding mask position prediction results by performing the mask position prediction based on the feature sequence. The semantic representation model can be, for example, a Transformer model.

When there are multiple mask positions, the mask position prediction result may include multiple prediction results of the mask positions. As an example, when the input is the mask image sequence which is a vector sequence, the corresponding mask position prediction result may be prediction vectors of the masked images at the mask positions. As another example, when the input is the mask character sequence which is a vector sequence, the corresponding mask position prediction result may be prediction vectors of masked characters at the mask positions. As still another example, when the input is the mask image-character sequence which is a vector sequence, the corresponding mask position prediction result is prediction vectors of the masked images at the mask positions or prediction vectors of the masked characters at the mask positions.

At block S103, a loss function is built based on the plurality of feature sequences, the mask position prediction results corresponding to the plurality of feature sequences and true mask position results, and coefficients of the semantic representation model are adjusted to realize training.

In some examples, sub-loss functions can be built respectively based on the mask position prediction results corresponding to the feature sequences and the true mask position results, to generate the loss function. The coefficients of the semantic representation model are adjusted based on values of the loss function to realize training. The true mask position results are ground truth.

In some examples, in order to further improve the accuracy of the trained semantic representation model, the pre-training data may include a first preset number of single videos and a second preset number of single texts. Correspondingly, the apparatus for pre-training the semantic representation model can, for each single video, adjust the coefficients of the semantic representation model for training by determining the mask image sequence of the single video as an input of the semantic representation model and determining a true mask position result of the single video as an output of the semantic representation model; and for each single text, adjust the coefficients of the semantic representation model for training by determining the mask character sequence of the single text as an input of the semantic representation model and determining a true mask position result of the single text as an output of the semantic representation model.

For each single video, the process of training the semantic representation model includes: obtaining a feature sequence outputted by the semantic representation model by inputting the mask image sequence of the single video into the semantic representation model; obtaining the corresponding mask position prediction result by performing mask position prediction on the feature sequence; and building a loss function based on the mask position prediction result and the true mask position result, and adjusting the coefficients of the semantic representation model based on the values of the loss function to realize the training.

For each single text, the process of training the semantic representation model includes: inputting the mask character sequence of the single text into the semantic representation model, to obtain a feature sequence outputted by the semantic representation model; obtaining the corresponding mask position prediction result by performing mask position prediction on the feature sequence; and generating a loss function based on the mask position prediction result and the true mask position result, and adjusting the coefficients of the semantic representation model based on the values of the loss function to realize the training.

In some examples, the semantic representation model that has been trained can be used as the pre-trained semantic representation model for specific tasks. For example, in a similar video recall task (or a similar video retrieval task), the pre-trained semantic representation model fine-tunes its coefficients based on the training data under this task, extracts video features of the video, and recalls similar videos based on the video features. As another example, in a text classification task, the pre-trained semantic representation model fine-tunes its coefficients based on the training data under this task, extracts text features of the text, and performing text classification based on the text features. As still another example, in a video search scenario, the pre-trained semantic representation model fine-tunes its coefficients based on the training data under this task, extracts text features of the search text, extracts video features of candidate videos, and determine videos that match the search text based on the text features and the video features.

With the method for pre-training the semantic representation model according to embodiments of the disclosure, for each video-text pair in pre-training data, determining a mask image sequence, a mask character sequence, and a mask image-character sequence of the video-text pair; determining a plurality of feature sequences and mask position prediction results respectively corresponding to the plurality of feature sequences by inputting the mask image sequence, the mask character sequence, and the mask image-character sequence into an initial semantic representation model; and building a loss function based on the plurality of feature sequences, the mask position prediction results respectively corresponding to the feature sequences and true mask position results, and adjusting coefficients of the semantic representation model to realize training. Therefore, the semantic representation model can learn the correlation between the video and the text corresponding to the video, and extract the video-text correlation features, so as to improve the accuracy of the trained semantic representation model.

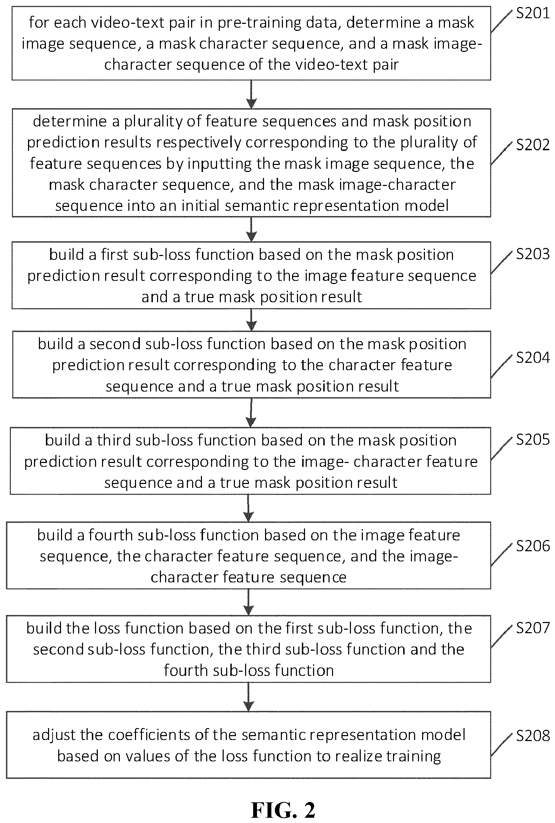

In order to further improve the accuracy of the semantic representation model, as illustrated in FIG. 2 which is a flowchart illustrating a method for pre-training a semantic representation model according to examples of the disclosure, a plurality of sub-loss functions can be built based on the plurality of feature sequences, the mask position prediction results respectively corresponding to the feature sequences and the true mask position results, the loss function can be built based on the plurality of sub-loss functions, and the coefficients of the semantic representation model can be adjusted to achieve the training. For example, FIG. 2 includes the following.

At block S201, for each video-text pair in the pre-training data, a mask image sequence, a mask character sequence, and a mask image-character sequence of the video-text pair are determined.

At block S202, a plurality of feature sequences and mask position prediction results respectively corresponding to the feature sequences are determined by inputting the mask image sequence, the mask character sequence, and the mask image-character sequence into an initial semantic representation model.

In some examples, determining the mask image sequence includes: obtaining a sample image sequence by performing image sampling on the video; obtaining the mask image sequence by performing vector processing and mask processing on the sample image sequence; and adding a flag bit at the head or beginning of the mask image sequence to obtain the first global image features of the mask image sequence. For the video-text pair $(v_p, t_p)$, where $v_p$ represents the video, and $t_p$ represents the text, the corresponding mask image sequence can be expressed as $[\mathrm{V_p}, F_1^p, \dots F_N^p, ]$, where $\mathrm{V_p}$ represents the flag bit, $F_1^p$ represents a vector corresponding to the first image; N represents a sum of the number of vectors and the number of mask markers in the mask image sequence.

In some examples, determining the mask character sequence includes performing vector processing and mask processing on each character in the text, to obtain the mask character sequence; and adding a flag bit at the head or beginning of the mask character sequence, to obtain the first global character features of the mask character sequence. For the video-text pair $(v_p, t_p)$, the mask character sequence can be expressed as $[\mathrm{Tx_p}, Tok_1^p, \dots Tok_M^p]$, where $\mathrm{Tx_p}$ represents the flag bit, $Tok_1^p$ represents a vector corresponding to the first character, and M represents a sum of the number of vectors and the number of mask markers in the mask character sequence.

In some examples, the mask image-character sequence is obtained by splicing the mask image sequence and the mask character sequence. For the video-text pair ($v_p$, $t_p$) , the mask image-character sequence is represented as

$$[V_p, F_1^p, ... F_N^p, Tx_p, Tok_1^p, ... Tok_M^p]$$ .

At block S203, a first sub-loss function is built based on the mask position prediction result corresponding to the image feature sequence included in the feature sequences and a true mask position result.

In some examples, the image feature sequence corresponds to the mask image sequence which is the feature sequence outputted by the semantic representation model by taking the mask image sequence as the input. The image feature sequence can be expressed as $\left[f_p^{[V]}, f_1^{[V]p}, ..., f_N^{[V]p}\right]$ , where $f_p^{[V]}$ corresponds to flag bit in the mask image sequence, which represents the first global image features of the mask image sequence, and $f_1^{[V]p}$ represents features corresponding to the first image contained in the mask image sequence.

In some examples, assuming that a total of K vectors contained in the mask image sequence are replaced by mask markers, based on the image feature sequence corresponding to the mask image sequence, the prediction vectors at the positions of the K mask markers can be predicted (i.e., the mask position prediction result). The first sub-loss function is built based on the prediction vectors at the positions of the K mask markers and the true vectors at the positions of the K mask markers (i.e., the true mask position result). The calculation formula of the first sub-loss function can be shown as a following formula:

$$L_{v_p} = \Sigma_{k=1}^{K} \left\| FC\left(f_{n_k}^{[V]p}\right) - F_{n_k}^p \right\| \qquad (1)$$

where $L_{v_p}$ represents the first sub-loss function; k = 1, ..., K; $n_k \in \{1,2,3, ..., N\}$; $FC\left(f_{n_k}^{[V]p}\right)$ represents a prediction vector at a position of the k$^{th}$ mask marker; $F_{n_k}^p$ represents a true vector at a position of the k$^{th}$ mask marker; FC is a full connected layer, which represents vectors at positions of the K mask markers predicted based on the image feature sequence.

At block S204, a second sub-loss function is built based on the mask position prediction result corresponding to the character feature sequence contained in the feature sequences and the true mask position result.

In some examples, the character feature sequence corresponds to the mask character sequence which is a feature sequence outputted by the semantic representation model by taking the mask character sequence as an input. The character feature sequence is expressed as $\left[r_p^{[T]}, r_1^{[T]p} ..., r_M^{[T]p}\right]$ , where $r_p^{[T]}$ corresponds to the flag bit contained in the mask character sequence, which represents the first global character features of the mask character sequence; and $r_1^{[T]p}$ represents the features corresponding to the first character contained in the mask character sequence.

In some examples, assuming that a total of L vectors contained in the mask character sequence are replaced with mask markers, based on the character feature sequence corresponding to the mask character sequence, the prediction vectors at the positions of the L mask markers can be predicted (i.e., the mask position prediction result). The second sub-loss function is built based on the prediction vectors at the positions of the L mask markers and the true vectors at the positions of the L mask markers (i.e. the true mask position result). The calculation formula of the second sub-loss function can be shown as a following formula:

$$L_{t_p} = \Sigma_{l=1}^{L} \left\| FC\left(r_{m_l}^{[T]p}\right) - Tok_{m_l}^p \right\| \qquad (2)$$

where $L_{t_p}$ represents the second sub-loss function; l=1, ... ,L; $m_l \in \{1,2,3, ..., M\}$; FC $\left(r_{m_l}^{[T]p}\right)$ represents the prediction vector at the position of the first mask marker; $\mathrm{Tok}^p_{\mathrm{m}_1}$ represents the true vector at the position of the first mask marker.

At block S205, a third sub-loss function is built based on the mask position prediction result corresponding to the image-character feature sequence included in the feature sequences and the true mask position result.

In some examples, the image-character feature sequence corresponds to the mask image-character sequence which is a feature sequence outputted by the semantic representation model by taking the mask image-character sequence as an input. The image-character feature sequence can be represented as $\left[f^{[TV]}_p, f^{[TV]p}_1, \ldots, f^{[TV]p}_N, r^{[TV]}_p, r^{[TV]p}_1, \ldots, r^{[TV]p}_M\right]$, where $f^{[TV]}_p$ corresponds to the flag bit at the head or beginning of the vectors of the images contained in the mask image-character sequence, i.e., corresponds to $v_p$, which represents the second global image features of the mask image-character sequence; $r^{[TV]}_p$ corresponds to the flag bit at the head or beginning of the vectors of the characters contained in the mask image-character sequence, i.e., corresponds to $t_p$, which represents the second global character features of the mask image-character sequence.

In some examples, assuming that a total of K image vectors contained in the mask image-character sequence are replaced by mask markers and a total of L character vectors contained in the mask image-character sequence are replaced by mask markers, based on the image-character feature sequence corresponding to the mask image-character sequence, the prediction vectors at the positions of the K and L mask markers can be predicted. The third sub-loss function is built based on the prediction vectors at the positions of the K and L mask markers and the true vectors at the positions of the K and L mask markers. The calculation formula of the third sub-loss function can be shown as a following formula:

$$L_{vt_p} = \Sigma^L_{l=1}\left\|FC\left(r^{[TV]p}_{\mathrm{m}_1}\right) - \mathrm{Tok}^p_{\mathrm{m}_1}\right\| + \Sigma^K_{k=1}\|FC\left(f^{[TV]p}_{\mathrm{n}_k}\right) - F^p_{\mathrm{n}_k}\| \quad (3)$$

where $L_{vt_p}$ represents the third sub-loss function; $FC\left(r^{[TV]p}_{\mathrm{m}_1}\right)$ represents the prediction vector at the position of the first one of the mask markers of the characters; $\mathrm{Tok}^p_{\mathrm{m}_1}$ represents the true vector at the position of the first one of the mask markers of the characters; $FC\left(f^{[TV]p}_{\mathrm{n}_k}\right)$ represents the prediction vector at the position of the $k^{th}$ one of the mask markers of the images; $F^p_{\mathrm{n}_k}$ represents the true vector at the position of the $k^{th}$ one of the mask markers of the images.

At block S206, a fourth sub-loss function is built based on the image feature sequence, the character feature sequence and the image-character feature sequence included in the plurality of feature sequences.

In some examples, the image feature sequence includes the first global image features of the mask image sequence, the character feature sequence includes the first global character features of the mask character sequence; and the image-character feature sequence includes the second global image features and second global character features of the mask image-character sequence.

Performing the block 206 by the apparatus for pre-training the semantic representation model includes: building a first partial sub-loss function based on the first global image features, the first global character features and first global image features of another video-text pair or other video-text pairs; generating a second partial sub-loss function based on the first global image features, the second global image features and the first global image features of another video-text pair or other video-text pairs; generating a third partial sub-loss function based on first global character features, the first global image features and first global character features of another video-text pair or other video-text pairs; generating a fourth partial sub-loss function based on the first global character features, second global character features and the first global character features of another video-text pair or other video-text pairs; and generating the fourth sub-loss function based on the first partial sub-loss function, the second partial sub-loss function, the third partial sub-loss function and the fourth partial sub-loss function.

In some examples, the calculation formula of the fourth sub-loss function may be shown as a following formula:

$$L_C = -\log\left(\frac{\exp\left(s\left(f_p^{[V]}, r_p^{[T]}\right)/\tau\right)}{\exp\left(s\left(f_p^{[V]}, r_p^{[T]}\right)/\tau\right) + \sum_{q \neq p} \exp\left(s\left(f_p^{[V]}, r_q^{[T]}\right)/\tau\right)}\right) -$$

$$\log\left(\frac{\exp\left(\frac{s\left(f_p^{[V]}, f_p^{[TV]}\right)}{\tau}\right)}{\exp\left(\frac{s\left(f_p^{[V]}, f_p^{[TV]}\right)}{\tau}\right) + \sum_{q \neq p} \exp\left(\frac{s\left(f_p^{[V]}, r_q^{[T]}\right)}{\tau}\right)}\right) - \log\left(\frac{\exp\left(s\left(r_p^{[T]}, f_p^{[V]}\right)/\tau\right)}{\exp\left(s\left(r_p^{[T]}, f_p^{[V]}\right)/\tau\right) + \sum_{q \neq p} \exp\left(s\left(r_p^{[T]}, f_q^{[V]}\right)/\tau\right)}\right) -$$

$$\log\left(\frac{\exp\left(s\left(r_p^{[T]}, r_p^{[TV]}\right)/\tau\right)}{\exp\left(s\left(r_p^{[T]}, r_p^{[TV]}\right)/\tau\right) + \sum_{q \neq p} \exp\left(s\left(r_p^{[T]}, f_q^{[V]}\right)/\tau\right)}\right) \quad (4)$$

where $L_C$ represents the fourth sub-loss function, the four calculators in the formula respectively represent the first partial sub-loss function, the second partial sub-loss function, the third partial sub-loss function and the fourth partial sub-loss function, s(x,y) represents the similarity function between any two vectors, such as the cosine similarity function, and $\tau$ represents a hyperparameter.

In some examples, the fourth sub-loss function is generated based on the first global image features, the first global character features, the second global image features and the second global character features of the video-text pair, and the first global image features and the first global character features of anther video-text pair or other video-text pairs. In this way, the first global image features and the second global image features of a video-text pair can be as close as possible, and the first global character features and the second global character features of the a video-text pair can also be as close as possible. Meanwhile, the first global image features of different video-text pairs should be distinguished and the first global character features of different video-text pairs should also be distinguished, so that the semantic representation model learns more video-text correlation features, and improves the accuracy of the semantic representation model, thereby improving the accuracy of downstream task execution.

At block S207, a loss function is built based on the first sub-loss function, the second sub-loss function, the third sub-loss function and the fourth sub-loss function.

As an example, the first sub-loss function, the second sub-loss function, the third sub-loss function and the fourth sub-loss function can be directly added together to obtain the loss function. As another example, a weighted sum can be performed on the first sub-loss function, the second sub-loss function, the third sub-loss function and the fourth sub-loss function according to respective weights to obtain the loss function.

At block S208, the coefficients of the semantic representation model are adjusted according to values of the loss function to realize the training.

For detailed descriptions of steps 201 to 202, reference may be made to the detailed descriptions of steps 101 to 102 in the implementation shown in FIG. 1, and detailed descriptions are omitted here.

With the method for pre-training a semantic representation model according to embodiments of the disclosure, a mask image sequence, a mask character sequence and a mask image-character sequence of the video-text pair are determined for each video-text pair in pre-training data; a plurality of feature sequences and mask position prediction results respectively corresponding to the plurality of feature sequences are determined by inputting the mask image sequence, the mask character sequence and the mask image-character sequence into an initial semantic representation model; a first sub-loss function is generated based on the mask position prediction result corresponding to the image feature sequence and the true mask position result; a second sub-loss function is generated based on the mask position prediction result corresponding to the character feature sequence and the true mask position result; a third sub-loss function is generated based on the mask position prediction result corresponding to the image-character feature sequence and the true mask position result; a fourth sub-loss function is generated based on the image feature sequence, the character feature sequence and the image-character feature sequence; the loss function is generated based on the first sub-loss function, the second sub-loss function, the third sub-loss function and the fourth sub-loss function; and the coefficients of the semantic representation model are adjusted based on the values of the loss function to realize training. Therefore, the semantic representation model can learn the correlation between the video and the text corresponding to the video, and extract the video-text correlation features, so as to improve the accuracy of the semantic representation model.

In order to illustrate the above embodiments more clearly, examples will be described as follows.

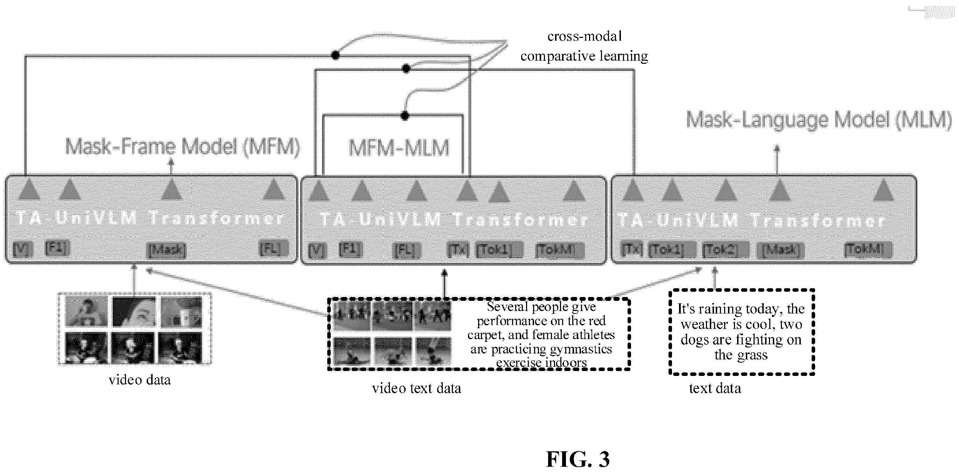

As illustrated in FIG. 3 which is a schematic diagram of pre-training the semantic representation model, three semantic representation models in FIG. 3 have the same structure and the same coefficients. Actually, the three semantic representation models are the same semantic representation model that is used for three times in one processing, and therefore, three semantic representation models are displayed for easy of understanding. In FIG. 3, the video data on the left is a single video, the text data on the right is a single text, and the video-text data in the middle is two video-text pairs. For a video-text pair, the cross-modality comparative learning in FIG. 3 refers to the construction and training of the third sub-loss function and the fourth sub-loss function. The block dot on a line segment whose two ends both point to the middle semantic representation model represents the third sub-loss function, and the block dot on a line segment whose two ends respectively point to different semantic representation models represents the fourth sub-loss function.

In order to implement the above embodiments, the disclosure also provides an apparatus for pre-training a semantic representation model.

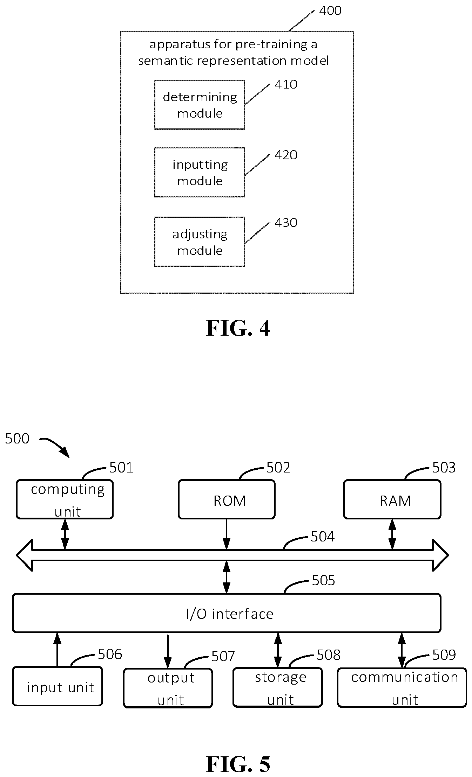

As illustrated in FIG. 4, FIG. 4 is a block diagram illustrating an apparatus for pre-training a semantic representation model according to examples of the disclosure. The apparatus 400 for pre-training a semantic representation model includes: a determining module 410, an inputting module 420 and an adjusting module 430.

The determining module 410 is configured to, for each video-text pair in pre-training data, determine a mask image sequence, a mask character sequence, and a mask image-character sequence of the video-text pair.

The inputting module 420 is configured to determine a plurality of feature sequences and mask position prediction results respectively corresponding to the plurality of feature sequences by inputting the mask image sequence, the mask character sequence, and the mask image-character sequence into an initial semantic representation model.

The adjusting module 430 is configured to build a loss function based on the plurality of feature sequences, the mask position prediction results respectively corresponding to the plurality of feature sequences and true mask position results, and adjust coefficients of the semantic representation model to realize training.

In some examples, the determining module 410 is further configured to: for each video-text pair in the pre-training data, determine a video and a text corresponding to the video in the video-text pair; determine the mask image sequence from the video, and determine the mask character sequence from the text; and obtain the mask image-character sequence by splicing the mask image sequence and the mask character sequence.

In some examples, the determining module 410 is further configured to: obtain a sample image sequence by performing image sampling on the video; obtain the mask image sequence by performing vector processing and mask processing on the sample image sequence; and obtain the mask character sequence by performing the vector processing and the mask processing on the text.

In some examples, the plurality of feature sequences include: an image feature sequence, a character feature sequence, and an image-character feature sequence. The adjusting module includes: a first building unit, a second building unit, a third building unit, a fourth building unit, a fifth building unit and an adjusting unit. The first building unit is configured to build a first sub-loss function based on the mask position prediction result corresponding to the image feature sequence and a true mask position result. The second building unit is configured to build a second sub-loss function based on the mask position prediction result corresponding to the character feature sequence and a true mask position result. The third building unit is configured to build a third sub-loss function based on the mask position prediction result corresponding to the image-character feature sequence and a true mask position result. The fourth building unit is configured to build a fourth sub-loss function based on the image feature sequence, the character feature sequence, and an image-character feature sequence. The fifth building unit is configured to build the loss function based on the first sub-loss function, the second sub-loss function, the third sub-loss function and the fourth sub-loss function. The adjusting unit is configured to adjust the coefficients of the semantic representation model based on value of the loss function to realize training.

In some examples, the image feature sequence includes first global image features of the mask image sequence, the character feature sequence includes first global character features of the mask character sequence, the image character feature sequence includes second global image features and second global character features of the mask image-character sequence, and the fourth building unit is further configured to: build a first partial sub-loss function based on the first global image features, the first global character features, and first global image features of another video-text pair; build a second partial sub-loss function based on the first global image features, the second global image features, and the first global image features of another video-text pair; build a third partial sub-loss function based on first global character features, the first global image features, and first global character features of another video-text pair; build a fourth partial sub-loss function based on the first global character features, second global character features, and the first global character features of another video-text pair; and build the fourth sub-loss function based on the first partial sub-loss function, the second partial sub-loss function, the third partial sub-loss function and the fourth partial sub-loss function.

In some examples, the pre-training data includes a first preset number of single videos and a second preset number of single texts, the adjusting module 430 is further configured to: for each single video, determine a mask image sequence of the video as an input of the semantic representation model and a true mask position result of the video as an output of the semantic representation model, and adjust the coefficients of the semantic representation model to realize the training; and for each single text, determine a mask character sequence of the text as the input of the semantic representation model and a true mask position result of the text as the output of the semantic representation model, and adjust the coefficients of the semantic representation model to realize the training.

In some examples, the text corresponding to the video includes at least one of: a title of the video and an abstract of the video.

With the apparatus for pre-training the semantic representation model according to embodiments of the disclosure, for each video-text pair in pre-training data, determining a mask image sequence, a mask character sequence, and a mask image-character sequence of the video-text pair; determining a plurality of feature sequences and mask position prediction results respectively corresponding to the plurality of feature sequences by inputting the mask image sequence, the mask character sequence, and the mask image-character sequence into an initial semantic representation model; and building a loss function based on the plurality of feature sequences, the mask position prediction results respectively corresponding to the feature sequences and true mask position results, and adjusting coefficients of the semantic representation model to realize training. Therefore, the semantic representation model can learn the correlation between the video and the text corresponding to the video, and extract the video-text correlation features, so as to improve the accuracy of the trained semantic representation model.

In the technical solution of the disclosure, the collection, storage, use, processing, transmission, provision and disclosure of the user's personal information involved are all carried out under the premise of obtaining the user's consent, and all comply with relevant laws and regulations, which do not violate public order and good customs.

According to the embodiments of the disclosure, the disclosure provides an electronic device, a readable storage medium and a computer program product.

FIG. 5 is a block diagram of an example electronic device 500 used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 5, the electronic device 500 includes: a computing unit 501 performing various appropriate actions and processes based on computer programs stored in a read-only memory (ROM) 502 or computer programs loaded from the storage unit 508 to a random access memory (RAM) 503. In the RAM 503, various programs and data required for the operation of the device 500 are stored. The computing unit 501, the ROM 502, and the RAM 503 are connected to each other through a bus 504. An input/output (I/O) interface 505 is also connected to the bus 504.

Components in the device 500 are connected to the I/O interface 505, including: an inputting unit 506, such as a keyboard, a mouse; an outputting unit 507, such as various types of displays, speakers; a storage unit 508, such as a disk, an optical disk; and a communication unit 509, such as network cards, modems, and wireless communication transceivers. The communication unit 509 allows the device 500 to exchange information/data with other devices through a computer network such as the Internet and/or various telecommunication networks.

The computing unit 501 may be various general-purpose and/or dedicated processing components with processing and computing capabilities. Some examples of computing unit 501 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 501 executes the various methods and processes described above, such as the method for pre-training a semantic representation model. For example, in some embodiments, the method for pre-training a semantic representation model may be implemented as a computer software program, which is tangibly contained in a machine-readable medium, such as the storage unit 508. In some embodiments, part or all of the computer program may be loaded and/or installed on the device 500 via the ROM 502 and/or the communication unit 509. When the computer program is loaded on the RAM 503 and executed by the computing unit 501, one or more steps of the method described above may be executed. Alternatively, in other embodiments, the computing unit 501 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, a server of a distributed system, or a server combined with a block-chain.

It is understandable that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of this application shall be included in the protection scope of this application.

**Claims**

1. A method for pre-training a semantic representation model, comprising:

   for each video-text pair in pre-training data, determining (S101; S201) a mask image sequence, a mask character sequence, and a mask image-character sequence of the video-text pair;
   determining (S102; S202) a plurality of feature sequences and mask position prediction results respectively corresponding to the plurality of feature sequences by inputting the mask image sequence, the mask character sequence, and the mask image-character sequence into an initial semantic representation model; and
   building (S103) a loss function based on the plurality of feature sequences, the mask position prediction results, and true mask position results, and adjusting coefficients of the semantic representation model to realize training.

2. The method of claim 1, wherein for each video-text pair in the pre-training data, determining (S101; S201) the mask image sequence, the mask character sequence, and the mask image-character sequence of the video-text pair comprises:

for each video-text pair in the pre-training data, determining a video and a text corresponding to the video in the video-text pair;

determining the mask image sequence from the video, and determining the mask character sequence from the text; and

obtaining the mask image-character sequence by splicing the mask image sequence and the mask character sequence.

3. The method of claim 2, wherein determining the mask image sequence from the video and the mask character sequence from the text comprises:

obtaining a sample image sequence by performing image sampling on the video;

obtaining the mask image sequence by performing vector processing and mask processing on the sample image sequence; and

obtaining the mask character sequence by performing the vector processing and the mask processing on the text.

4. The method of any one of claims 1 to 3, wherein the plurality of feature sequences comprise an image feature sequence, a character feature sequence, and an image-character feature sequence, and wherein building (S103) the loss function based on the plurality of feature sequences, the mask position prediction results and the true mask position results, and adjusting the coefficients of the semantic representation model to realize training comprises:

building (S203) a first sub-loss function based on the mask position prediction result corresponding to the image feature sequence and a true mask position result corresponding to the image feature sequence;

building (S204) a second sub-loss function based on the mask position prediction result corresponding to the character feature sequence and a true mask position result corresponding to the character feature sequence;

building (S205) a third sub-loss function based on the mask position prediction result corresponding to the image-character feature sequence and a true mask position result corresponding to the image-character feature sequence;

building (S206) a fourth sub-loss function based on the image feature sequence, the character feature sequence and the image and character feature sequence;

building (S207) the loss function based on the first sub-loss function, the second sub-loss function, the third sub-loss function and the fourth sub-loss function; and

adjusting (S208) the coefficients of the semantic representation model based on values of the loss function to realize training.

5. The method of claim 4, wherein the image feature sequence comprises first global image features of the mask image sequence, the character feature sequence comprises first global character features of the mask character sequence, the image-character feature sequence comprises second global image features and second global character features of the mask image-character sequence, and wherein building (S206) the fourth sub-loss function based on the image feature sequence, the character feature sequence and the image-character feature sequence comprises:

building a first partial sub-loss function based on the first global image features, the first global character features and first global character features of another video-text pair;

building a second partial sub-loss function based on the first global image features, the second global image features and the first global character features of another video-text pair;

building a third partial sub-loss function based on the first global character features, the first global image features and first global image features of another video-text pair;

building a fourth partial sub-loss function based on the first global character features, the second global character features and the first global image features of another video-text pair; and

building the fourth sub-loss function based on the first partial sub-loss function, the second partial sub-loss function, the third partial sub-loss function and the fourth partial sub-loss function.

6. The method of any one of claims 1 to 5, wherein the pre-training data comprises a first preset number of single videos and a second preset number of single texts, wherein the method further comprises:

for each single video, determining a mask image sequence of the single video as an input of the semantic representation model, determining true mask position results of the single video as an output of the semantic representation model, and adjusting the coefficients of the semantic representation model to realize the training; and

for each single text, determining a mask character sequence of the single text as the input of the semantic representation model and determining true mask position results of the text as the output of the semantic representation model, and adjusting the coefficients of the semantic representation model to realize the training.

7.   The method of claim 1 or 2, wherein the text corresponding to the video comprise at least one of: a title of the video and an abstract of the video.

8.   An apparatus (400) for pre-training a semantic representation model, comprising:

a determining module (410), configured to, for each video-text pair in pre-training data, determine a mask image sequence, a mask character sequence and a mask image-character sequence of the video-text pair;
an inputting module (420), configured to determine a plurality of feature sequences and mask position prediction results respectively corresponding to the plurality of feature sequences by inputting the mask image sequence, the mask character sequence and the mask image-character sequence into an initial semantic representation model; and
an adjusting module (430), configured to build a loss function based on the plurality of feature sequences, the mask position prediction results and true mask position results, and adjust coefficients of the semantic representation model to realize training.

9.   The apparatus (400) of claim 8, wherein the determining module (410) is further configured to:

for each video-text pair in the pre-training data, determine a video and a text corresponding to the video in the video-text pair;
determine the mask image sequence for the video, and determine the mask character sequence for the text; and
obtain the mask image-character sequence by splicing the mask image sequence and the mask character sequence.

10.   The apparatus (400) of claim 8 or 9, wherein the plurality of feature sequences comprise:
an image feature sequence, a character feature sequence, and an image-character feature sequence, and the adjusting module (430) comprises: a first building unit, a second building unit, a third building unit, a fourth building unit, a fifth building unit and an adjusting unit;

the first building unit is configured to build a first sub-loss function based on the mask position prediction results and the true mask position results corresponding to the image feature sequence;
the second building unit is configured to build a second sub-loss function based on the mask position prediction results and the true mask position results corresponding to the character feature sequence;
the third building unit is configured to build a third sub-loss function based on the mask position prediction results and the true mask position results corresponding to the image-character feature sequence;
the fourth building unit is configured to build a fourth sub-loss function based on the image feature sequence, the character feature sequence and the image-character feature sequence;
the fifth building unit is configured to build the loss function based on the first sub-loss function, the second sub-loss function, the third sub-loss function and the fourth sub-loss function; and
the adjusting unit is configured to adjust the coefficients of the semantic representation model based on values of the loss function to realize training.

11.   The apparatus (400) of claim 10, wherein the image feature sequence comprises first global image features of the mask image sequence, the character feature sequence comprises first global character features of the mask character sequence, the image-character feature sequence comprises second global image features and second global character features of the mask image-character sequence, and wherein the fourth building unit is further configured to:

build a first partial sub-loss function based on the first global image features, the first global character features and first global image features of another video-text pair;
build a second partial sub-loss function based on the first global image features, the second global image features and the first global image features of another video-text pair;
build a third partial sub-loss function based on first global text features, the first global image features and first global text features of another video-text pair;
build a fourth partial sub-loss function based on the first global text features, the second global text features and the first global text features of another video-text pair; and

build the fourth sub-loss function based on the first partial sub-loss function, the second partial sub-loss function, the third partial sub-loss function and the fourth partial sub-loss function.

12. The apparatus (400) of any one of claims 8 to 11, wherein the pre-training data comprises a first preset number of single videos and a second preset number of single texts, and the adjusting module (430) is further configured to:

for each single video, determine a mask image sequence of the single video as an input of the semantic representation model, determine true mask position results of the single video as an output of the semantic representation model, and adjust the coefficients of the semantic representation model to realize the training; and for each single text, determine a mask character sequence of the single text as the input of the semantic representation model and determine true mask position results of the text as the output of the semantic representation model, and adjust the coefficients of the semantic representation model to realize the training.

13. An electronic device, comprising:

at least one processor; and
a memory communicatively coupled to the at least one processor; wherein,
the memory stores instructions executable by the at least one processor, when the instructions are executed by the at least one processor, the at least one processor is enabled to implement the method of any one of claims 1 to 7.

14. A non-transitory computer-readable storage medium having computer instructions stored thereon, wherein the computer instructions are configured to cause a computer to implement the method of any one of claims 1 to 7.

15. A computer program product comprising computer programs, wherein when the computer programs are executed by a processor, the method of any one of claims 1 to 7 is implemented.

for each video-text pair in pre-training data, determine a mask image sequence, a mask character sequence, and a mask image-character sequence of the video-text pair — S101

determine a plurality of feature sequences and mask position prediction results respectively corresponding to the plurality of feature sequences by inputting the mask image sequence, the mask character sequence, and the mask image-character sequence into an initial semantic representation model — S102

build a loss function based on the plurality of feature sequences, the mask position prediction results respectively corresponding to the plurality of feature sequences and true mask position results, and adjust coefficients of the semantic representation model to realize training — S103

**FIG. 1**

for each video-text pair in pre-training data, determine a mask image sequence, a mask character sequence, and a mask image-character sequence of the video-text pair /S201

determine a plurality of feature sequences and mask position prediction results respectively corresponding to the plurality of feature sequences by inputting the mask image sequence, the mask character sequence, and the mask image-character sequence into an initial semantic representation model /S202

build a first sub-loss function based on the mask position prediction result corresponding to the image feature sequence and a true mask position result /S203

build a second sub-loss function based on the mask position prediction result corresponding to the character feature sequence and a true mask position result /S204

build a third sub-loss function based on the mask position prediction result corresponding to the image- character feature sequence and a true mask position result /S205

build a fourth sub-loss function based on the image feature sequence, the character feature sequence, and the image-character feature sequence /S206

build the loss function based on the first sub-loss function, the second sub-loss function, the third sub-loss function and the fourth sub-loss function /S207

adjust the coefficients of the semantic representation model based on values of the loss function to realize training /S208

**FIG. 2**

cross-modal
comparative learning

Mask-Frame Model (MFM)    MFM-MLM    Mask-Language Model (MLM)

TA UniVLM Transformer    TA UniVLM Transformer    TA UniVLM Transformer

[V] [F1] [Mask] [FL]    [V] [F1] [FL] [Tx] [Tok1] [TokM]    [Tx] [Tok1] [Tok2] [Mask] [TokM]

video data

Several people give performance on the red carpet, and female athletes are practicing gymnastics exercise indoors

video text data

It's raining today, the weather is cool, two dogs are fighting on the grass

text data

**FIG. 3**

400

apparatus for pre-training a
semantic representation model

determining
module                 410

inputting
module                 420

adjusting
module                 430

**FIG. 4**

500

computing
unit          501

ROM          502

RAM          503

504

505

I/O interface

input unit   506

output
unit          507

storage
unit          508

communication
unit          509

**FIG. 5**